# EUROPEAN PATENT APPLICATION

(11) **EP 2 770 508 A1**
(43) Date of publication of application: **27.08.2014**
(21) Application number: 14156006.0
(22) Date of filing: 20.02.2014
(51) Int. Cl.: G21C 3/322, G21C 3/33, G21C 3/34

(54) **Fuel assembly**

(30) Priority: 26.02.2013 JP 2013035284
(71) Applicant: Hitachi, Ltd., Tokyo 100-8280 (JP)
(72) Inventor: Katono, Kenichi, Tokyo, 100-8280 (JP); Mitsuyasu, Takeshi, Tokyo, 100-8280 (JP); Nagayoshi, Takuji, Tokyo, 100-8280 (JP); Aoyama, Motoo, Tokyo, 100-8280 (JP)
(74) Representative: MERH-IP Matias Erny Reichl Hoffmann

(57) **Abstract**

A flow path hole area of a lower tie plate (6) at a center part is larger than that of the lower tie plate (6) at an outside. Thus, just after the lower tie plate (6), a coolant flow rate can be increased at a cross-sectional center part of a fuel assembly (1), and the heat removal performance of the center fuel rod is maintained. In a fuel rod (2) arrangement, a fuel rod (2) arrangement pitch at an outer peripheral part is larger than that at a center part. Thus, as coolant rises in the fuel assembly (1), the coolant flows to the outer peripheral part more easily than to the center part in the cross section. Accordingly, thermal margin of the outermost peripheral fuel rod (2) can be improved in a fuel assembly (1) upper region.

## Description

### FIELD OF THE INVENTION

The present invention relates to a fuel assembly used in a reactor core of a nuclear power plant.

### BACGROUND OF THE INVENTION

Many fuel assemblies in each of which a fuel bundle is contained in a square tubular channel box are arranged in a reactor core of a boiling water reactor. Each fuel bundle includes many fuel rods in which plural fuel pellets containing Uranium are sealed, an upper tie plate to support upper parts of the fuel rods, a lower tie plate to support lower parts of the fuel rods, and a fuel spacer to hold an interval between the fuel rods. In the reactor, non-boiling water exists outside the channel box, and water boiled by heat generation of the fuel rods exists in the channel box. In general, as neutrons generated from a nuclear fuel are decelerated by water, the reaction probability with fission material increases. Thus, there is a tendency that burning of fuel at a place closer to the non-boiling water than to the boiling water is accelerated. Accordingly, since the output of the fuel rod at the outermost peripheral part facing the inner wall of the channel box becomes high, the margin for heat removal performance in fuel rod units becomes small as compared with the fuel at the fuel assembly center part. In a fuel assembly of a general boiling water reactor, the uranium enrichment of a fuel rod at the outer peripheral part is reduced as compared with that at the inside, and the design is made so that the output distribution becomes uniform between the fuel assembly outer peripheral part and the center part. Conversely, if the thermal margin is secured, the fission material enrichment can be increased, and the loading amount of the fission material can be increased.

For the purpose of increasing the thermal margin of a fuel assembly, Japanese Unexamined Patent Publication No. 2007-232467proposes a fuel assembly in which arrangement of fuel rods is changed to improve the heat removal performance from fuel rods positioned near four corners, among the fuel rods at the outermost peripheral part, where the fuel rods receive the largest influence of non-boiling water and the output thereof tends to become large. Besides, Japanese Unexamined Patent Publication No. 4-315991 proposes a fuel assembly in which the area of a flow path hole of a lower tie plate at the outer peripheral part of the lower tie plate is made larger than that at the center part, so that thermal margin at the fuel assembly outer peripheral part is improved.

The fuel assembly disclosed in Japanese Unexamined Patent Publication No. 2007-232467 or the like, at any height position of the fuel assembly, the coolant flow rate at the cross-sectional outer peripheral part is larger than that at the center part. Besides, as described above, in the fuel assembly of the boiling water reactor of the related art, the uranium enrichment is adjusted so that the output distribution becomes uniform between the cross-sectional outer peripheral part and the center part at the height position where boiling water exists in the channel box. Thus, at the lower position of the fuel assembly where non-boiling water exists in the channel box, the output at the cross-sectional center part becomes relatively high. Accordingly, in the fuel assembly disclosed in Japanese Unexamined Patent Publication No. 2007-232467 or the like, although the thermal margin at the fuel assembly upper part can be expected, there is a fear that the heat removal performance is reduced when attention is paid to the fuel assembly lower part.

### SUMMARY OF THE INVENTION

The invention has an object to improve heat removal performance of a center fuel rod by increasing a coolant flow rate at a cross-sectional center part in a fuel assembly lower region in a fuel assembly.

In order to achieve the object, a fuel assembly according to the invention includes plural fuel rods and plural water rods having a uniform extension direction and disposed inside a square tubular channel box, an upper tie plate to support upper ends of the fuel rods and the water rods, a lower tie plate which supports lower ends of the fuel rods and the water rods and includes coolant inflow holes for introducing coolant to coolant flow paths provided between the fuel rods and the water rods, and/or plural fuel spacers to hold the fuel rods and the water rods, wherein a flow path hole area of the lower tie plate at a center part is larger than that of the lower tie plate at an outside.

According to the invention, the heat removal performance of the center fuel rod in the fuel assembly lower region can be improved.

### BRIEF DESCRIPTION OF THE DRAWINGS

FIG. 1 is a view showing a rough structure of a boiling water reactor to which a fuel assembly of the invention is applied.
FIG. 2 is a view showing a structure of a fuel assembly of a first embodiment.
FIG. 3 is a cross-sectional view of a lower tie plate of the first embodiment.
FIG. 4 is a cross-sectional view of the fuel assembly of the first embodiment.
FIG. 5 is a view showing a structure of a fuel spacer of a second embodiment.
FIG. 6 is a view showing a structure of a fuel spacer of a third embodiment.

### DETAILED DESCRIPTION OF THE PREFERRED EMBODIMENTS

The inventors investigated heat removal characteristics in a fuel assembly. As described above, since the fuel design is formed at the height where boiling water exists in a channel box, the output of a center fuel rod becomes relatively high in a fuel assembly lower part where non-boiling water exists in the channel box. On the other hand, in order to improve the burning efficiency of fission material, it is most efficient to burn the outermost peripheral fuel rod adjacent to the channel box. However, when the loading amount of the fission material is increased in the outermost peripheral fuel rod, the thermal margin is degraded. From these, the inventors conclude that water flow in the fuel assembly is controlled, and the heat removal performance of the center fuel rod can be improved by relatively increasing the coolant flow rate at the cross-sectional center part in the fuel assembly lower region, and further, the thermal margin of the outermost peripheral fuel rod can be improved by relatively increasing the coolant flow rate at the cross-sectional outer peripheral part in the fuel assembly upper region.

Embodiments of the invention reflecting the above investigation result will be described below.

### Embodiment 1

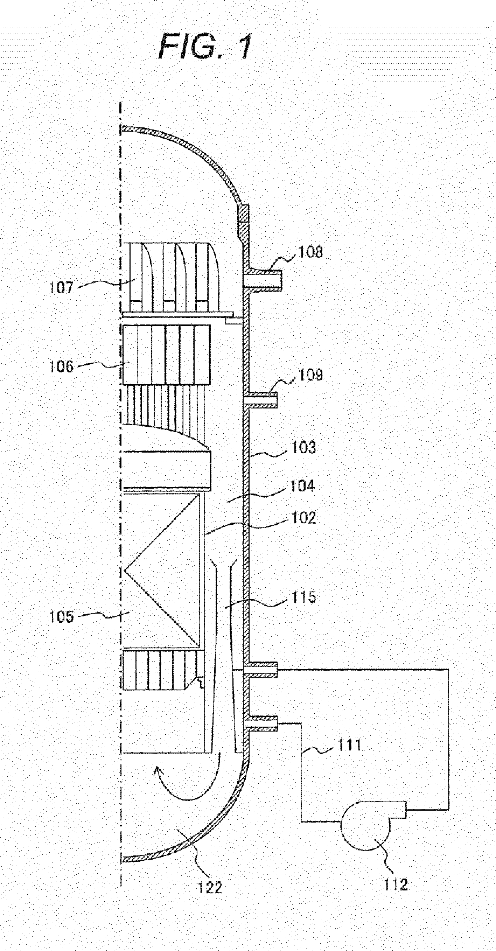

A fuel assembly of embodiment 1 applied to a boiling water reactor as one preferable embodiment of the invention will be described in detail with reference to FIG. 1 to FIG. 4.

FIG. 1 is a view showing a rough structure of a boiling water reactor to which the fuel assembly of this embodiment and a reactor core are applied. As shown in FIG. 1, the boiling water reactor (BWR) includes a reactor pressure vessel (reactor vessel) 103. A core shroud 102 is placed in the reactor pressure vessel 103. In the following description, the reactor pressure vessel is called RPV. A reactor core 105 in which after-mentioned plural fuel assemblies are loaded is disposed in the core shroud 102. A steam separator 106 and a steam dryer 107 are disposed above the reactor core 105 in the RPV 103. An annular downcomer 104 is formed between the RPV 103 and the core shroud 102. A reactor jet pump 115 is disposed in the downcomer 104. A recirculation system provided in the RPV 103 includes a recirculation pipe 111 and a recirculation pump 112 connected to the recirculation pipe 111.

Cooling water discharged from the reactor jet pump 115 is supplied to the reactor core 105 through a lower plenum 122. The cooling water is heated when passing through the reactor core 105, and becomes gas-liquid two-phase flow including water and steam. The steam separator 106 separates the gas-liquid two-phase flow into steam and water. The separated steam is further dried by the steam dryer 107 and is guided to a main steam pipe 108. This steam is guided to a steam turbine (not shown) and rotates the steam turbine. A generator coupled to the steam turbine is rotated and generates power. The steam discharged from the steam turbine is condensed by a steam condenser (not shown) into water. The condensed water is supplied as feed water into the RPV 103 through a water supply pipe 109. The water separated by the steam separator 106 and the steam dryer 107 drops and reaches the downcomer 104 as cooling water.

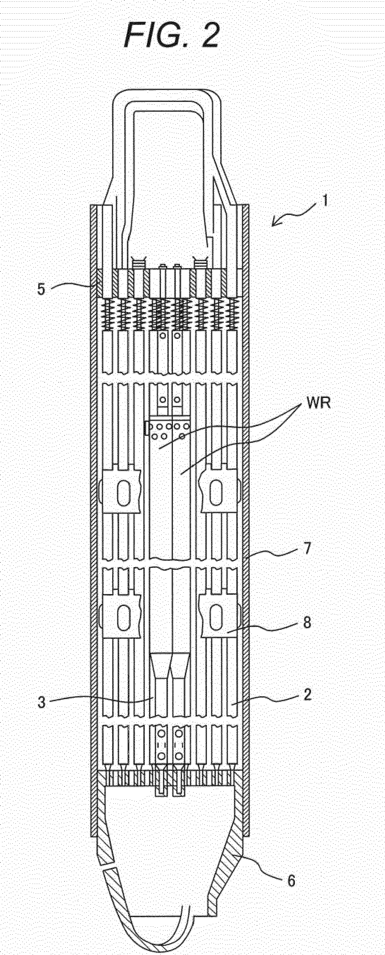

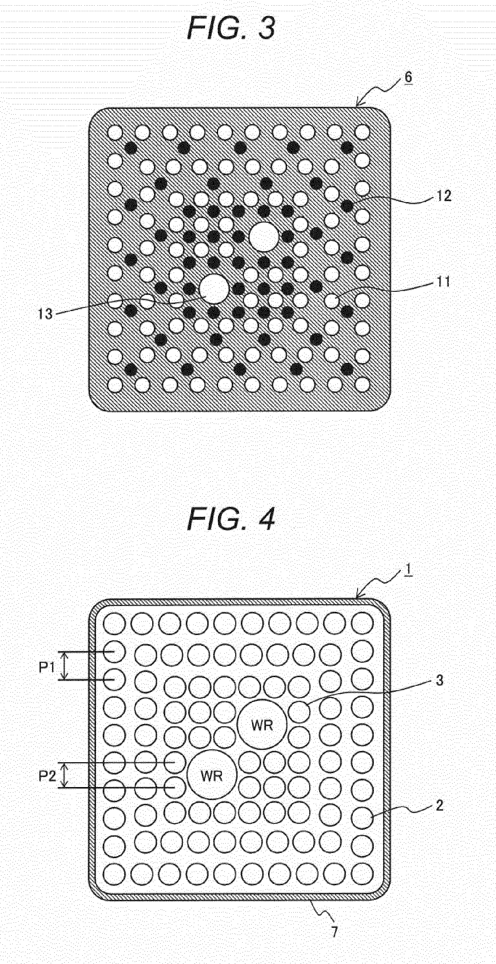

FIG. 2 is a view showing a structure of a fuel assembly 1, FIG. 3 is a cross-sectional view of a lower tie plate 6 of the embodiment, and FIG. 4 is a cross-sectional view of the fuel assembly 1 of the embodiment. The fuel assembly 1 of the embodiment includes plural fuel rods FR, an upper tie plate 5, the lower tie plate 6, plural fuel spacers 8, plural water rods WR and a channel box 7. The fuel rod FR is such that plural fuel pellets (not shown) are filled and sealed in a cladding tube (not shown). The lower tie plate 6 supports lower ends of the respective fuel rods FR, and the upper tie plate 5 supports upper ends of the respective fuel rods FR.

The fuel rods FR are arranged ten rows by ten columns in a cross section of the fuel assembly 1. The two water rods WR are arranged at the center part of the cross section. Lower ends of the water rods WR are supported by the lower tie plate 6, and upper ends thereof are held by the upper tie plate 5. The plural fuel spacers 8 are arranged at a specified interval in an axial direction of the fuel assembly 1, and hold the fuel rods FR and the water rods WR so that flow paths through which cooling water flows are formed between the fuel rods FR and between the fuel rod FR and the water rod WR.

The channel box 7 is a square tubular member having a square cross section. The channel box 7 is attached to the upper tie plate 5 and extends downward. The respective fuel rods FR, which are bundled by the fuel spacers 8 while the extension directions are made uniform, are disposed in the channel box 7. Incidentally, the outer width of the channel box is about 15 cm, the outer diameter of the fuel rod FR is about 1.0 cm, and the outer diameter of the water rod WR is about 2.5 cm.

In the lower tie plate 6 of the embodiment, in order to increase the coolant flow rate at the cross-sectional center part in the lower region of the fuel assembly 1, a flow path hole area of the lower tie plate 6 at the center part is made larger than that at the outside of the lower tie plate. Specifically, FIG. 3 shows fuel rod holes 11 arranged on a plane of the lower tie plate, water rod holes 13 arranged at the center part of the lower tie plate, and coolant inflow holes 12 arranged between the fuel rod holes 11. In this embodiment, the coolant inflow holes 12 are densely arranged at the center part of the lower tie plate (in the range where the fuel rod holes 11 are arranged six rows by six columns). On the other hand, the coolant inflow holes 12 are thinly arranged at the outer peripheral part of the lower tie plate. Accordingly, the area of the coolant inflow holes of the lower tie plate at the center part is larger than that at the outer peripheral part.

Besides, in the fuel assembly 1 of the embodiment, a fuel rod pitch PI of outermost peripheral fuel rods 2 is larger than a fuel rod pitch P2 of fuel rods 3 around the water rods WR arranged at the center part of the cross section. By this, the interval between the coolant flow paths at the cross-sectional center part is narrow.

By this structure, just after the lower tie plate 6, the coolant flow rate can be increased at the cross-sectional center part of the fuel assembly 1, and the heat removal performance of the center fuel rod can be improved. Besides, by the above fuel rod arrangement, as the coolant rises in the fuel assembly 1, the coolant flows more easily to the outer peripheral part in the cross section than to the center part. Accordingly, the thermal margin of the outermost peripheral fuel rods can be improved in the upper region of the fuel assembly 1.

### Embodiment 2

A fuel assembly of embodiment 2 applied to a boiling water reactor as one preferable embodiment of the invention will be described.

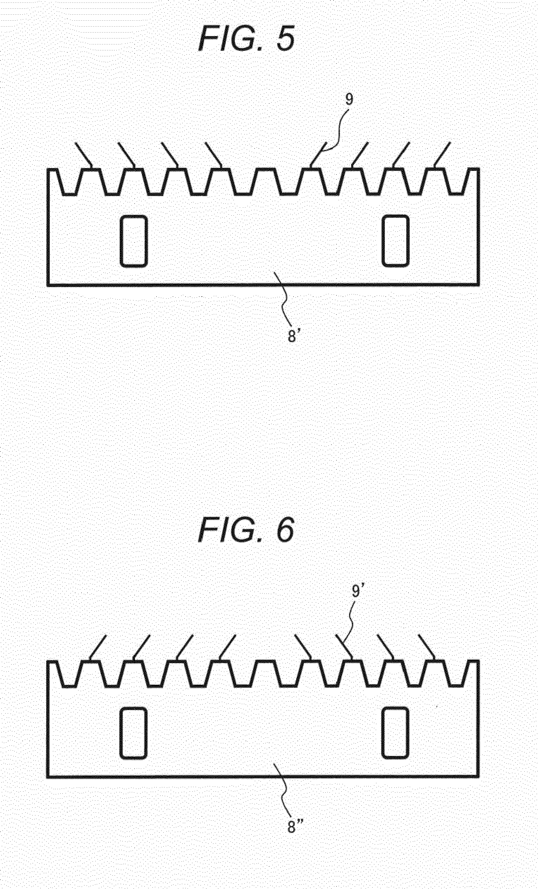

The fuel assembly of the embodiment 2 is different from the fuel assembly of the embodiment 1 in that a fuel spacer 8' having a structure of FIG. 5 is applied. In general, spacers in a fuel assembly are placed at a constant interval in the height direction of the fuel assembly and hold the fuel rods in order to prevent bending or the like of the fuel rods. The fuel spacer 8' of this embodiment is provided with coolant guide plates 9 for guiding coolant passing through the spacer toward the outside in a lateral direction section.

By this structure, just after the lower tie plate 6, the coolant flow rate at the cross-sectional center part of the fuel assembly 1 can be increased, and the heat removal performance of the center fuel rod can be maintained. Besides, when the coolant rises in the fuel assembly 1 and passes through the fuel spacer 8', the coolant flows to the outside in the cross section. Accordingly, the thermal margin of the outermost peripheral fuel rods can be improved in the upper region of the fuel assembly 1.

Incidentally, the same effect can be obtained by using, instead of the fuel spacer 8' of FIG. 5, a fuel spacer in which the resistance coefficient of an outside region in the lateral direction section is decreased, for example, a partial spacer having a mechanism to hold only the center fuel rods.

### Embodiment 3

A fuel assembly of embodiment 3 applied to a boiling water reactor as one preferable embodiment will be described.

The fuel assembly of the embodiment 3 is different from the fuel assembly of the embodiment 2 in that a fuel spacer 8" having a structure of FIG. 6 is applied to the lower region of the fuel assembly 1. The fuel spacer 8" is provided with coolant guide plates 9' for guiding coolant passing through the spacer toward the center part in the lateral direction section.

By this structure, just after the lower tie plate 6, the coolant flow rate can be increased in the cross-sectional center part of the fuel assembly 1, and the heat removal performance of the center fuel rod is maintained. In a general fuel spacer, a coolant flow rate distribution in a cross section is uniformed when the coolant passes through the spacer part. On the other hand, in this embodiment, by the fuel spacer 8", the coolant flow rate can be again increased at the cross-sectional center part, and the heat removal performance of the center fuel rod is maintained. Besides, when the coolant rises in the fuel assembly 1 and passes through the fuel spacer 8' placed in the upper region of the fuel assembly 1, the coolant flows to the outside in the cross section. Accordingly, the thermal margin of the outermost peripheral fuel rods can be improved in the upper region of the fuel assembly 1.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. A fuel assembly comprising:
a plurality of fuel rods FR and a plurality of water rods WR disposed inside a channel box (7);
an upper tie plate (5) to support upper ends of the fuel rods (2, 3) and the water rods WR;
a lower tie plate (6) which supports lower ends of the fuel rods (2, 3) and the water rods WR and includes coolant inflow holes (12) for introducing coolant to coolant flow paths provided between the fuel rods (2, 3) and the water rods WR; and
a plurality of fuel spacers (8) to hold the fuel rods (2, 3) and the water rods WR,
**characterized in that** an area of the coolant inflow holes (12) of the lower tie plate (6) at a center part is larger than that of the lower tie plate (6) at an outside.

2. The fuel assembly according to claim 1, wherein an arrangement pitch of the fuel rods (2) at an outermost periphery is larger than an arrangement pitch of the fuel rods (3) around the water rods WR.

3. The fuel assembly according to claim 1 or 2, wherein the fuel spacer (8) includes a coolant guide plate (9) to guide the coolant to an outside in a lateral direction section.

4. The fuel assembly according to any one of claims 1 to 3, wherein the fuel spacer (8) at a lower part of the fuel assembly includes a coolant guide plate (9') to guide the coolant to a center part in a lateral direction section.
